(19)

Europäisches
Patentamt
European
Patent Office
Office européen
des brevets

(11) **EP 4 641 761 A1**

(12) **EUROPEAN PATENT APPLICATION**

(43) Date of publication:
29.10.2025 Bulletin 2025/44

(21) Application number: 24215777.4

(22) Date of filing: 27.11.2024

(51) International Patent Classification (IPC):
**H01M 10/613** (2014.01)      **H01M 10/617** (2014.01)
**H01M 10/6556** (2014.01)     **H01M 10/6567** (2014.01)
**H01M 10/6568** (2014.01)     **H01M 50/204** (2021.01)

(52) Cooperative Patent Classification (CPC):
H01M 10/613; H01M 10/617; H01M 10/6556;
H01M 10/6567; H01M 10/6568; H01M 50/204

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.04.2024 CN 202420895423 U
26.04.2024 CN 202410517109

(71) Applicant: Eve Energy Co., Ltd.
Huizhou, Guangdong 516006 (CN)

(72) Inventors:
• DONG, Yapeng
Huizhou, Guangdong 516006 (CN)

• LI, Wei
Huizhou, Guangdong 516006 (CN)
• SHANG, Jin
Huizhou, Guangdong 516006 (CN)
• ZHAO, Hengxi
Huizhou, Guangdong 516006 (CN)
• KUANG, Haipeng
Huizhou, Guangdong 516006 (CN)
• XIAO, Peng
Huizhou, Guangdong 516006 (CN)
• ZHANG, Hui
Huizhou, Guangdong 516006 (CN)

(74) Representative: Herrero & Asociados, S.L.
Edificio Aqua - Agustín de Foxá, 4-10
28036 Madrid (ES)

(54) **BATTERY CASE, BATTERY PACK, AND METHOD FOR MANUFACTURING THE BATTERY CASE**

(57) The present disclosure discloses a battery case, which includes a case body and a liquid-cooling assembly. The case body is provided with an inner support beam. The inner support beam is provided with an inner guide passage and an output pipe connector in communication with the inner guide passage. The liquid-cooling assembly is mounted in the case body, and includes a first shunt element and a second shunt element arranged opposite to each other. The inner guide passage is arranged between the first shunt element and the second shunt element, and the first shunt element and the second shunt element are both in communication with the output pipe connector. The first shunt element guides the heat exchange medium to be transmitted along a diagonal direction thereof, while the second shunt element guides the heat exchange medium to transmit along a diagonal direction thereof.

FIG. 1

EP 4 641 761 A1

# Description

## TECHNICAL FIELD

The present disclosure relates to the technology field of batteries, and in particular, to a battery case, a battery pack and a method for manufacturing the battery case.

## BACKGROUND

Existing battery packs generate heat during charging and discharging. However, excessively high temperatures or large temperature differences can seriously affect the performance and service life of the battery pack.

In view of the above-mentioned influencing factors, liquid-cooling solutions adopted in thermal management design commonly used in the industry now mainly adopts liquid-cooling plates for cooling. However, existing liquid-cooling plates are all designed to optimize flow passages for thermal management. These existing liquid-cooling plates generally have the following disadvantages: complex pipelines, excessively long flow passages, high pressure drops in the flow passages, and low cooling efficiency, which may result in large temperature differences between different locations of existing battery packs and poor durability of the battery packs.

## SUMMARY

In a first aspect, the present disclosure provides a battery case which includes a case body and a liquid-cooling assembly. The case body is provided with an inner support beam. The inner support beam is provided with an inner guide passage and an output pipe connector. The output pipe connector is in communication with the inner guide passage. The liquid-cooling assembly is mounted in the case body. The liquid-cooling assembly includes a first shunt element and a second shunt element arranged opposite to each other. The inner guide passage is arranged between the first shunt element and the second shunt element, and the first shunt element and the second shunt element are both in communication with the output pipe connector. The first shunt element is configured to guide heat exchange medium to be transmitted along a diagonal direction of the first shunt element from a corner of the first shunt element near the inner guide passage, while the second shunt element is configured to guide heat exchange medium to be transmitted along a diagonal direction of the second shunt element from a corner of the second shunt element near the inner guide passage.

In a second aspect, the present disclosure provides a battery pack, which includes the above-mentioned battery case and a battery module arranged in the case body of the battery case, where the battery module exchanges heat with the liquid-cooling assembly.

In a third aspect, the present disclosure provides a method for manufacturing the above-mentioned battery case, which includes: extruding and molding a first upper plate of the first shunt element using a first mould, extruding and molding a first lower plate of the first shunt element using a second mould, and then symmetrically splicing and welding the first upper plate and the first lower plate together to form the first shunt element; extruding and molding a second upper plate of the second shunt element using the first mould, extruding and molding a second lower plate of the second shunt element using the second mould, and then symmetrically splicing and welding the second upper plate and the second lower plate together to form the second shunt element; forming the case body by means of a welding process; and placing the first shunt element and the second shunt element into the case body one by one, with the first shunt element and the second shunt element on two opposite sides of the inner support beam of the case body.

The cooperation between the inner guide passage and the liquid-cooling assembly arranged in the inner support beam of the case body, not only simplifies the diversion of the input heat exchange medium, but also solves the problems of complex pipelines, excessively long flow passages, and high pressure drops in the flow passages in the existing liquid-cooling plates. At the same time, due to the heat exchange medium injected into the liquid-cooling assembly flows along a diagonal direction of the first shunt element and a diagonal direction of the second shunt element, it can effectively cool the central high-temperature area of the battery module, thereby solving the problem of low cooling efficiency in existing liquid-cooling plates.

## BRIEF DESCRIPTION OF THE DRAWINGS

FIG. 1 is a schematic structural diagram of a battery case according to the present disclosure.
FIG. 2 is a schematic diagram of a top view structure of the battery case according to the present disclosure.
FIG. 3 is a partial assembly diagram of the battery case according to the present disclosure.
FIG. 4 is a schematic diagram of the temperature distribution on a first shunt element according to the present disclosure.
FIG. 5 is a schematic diagram of the temperature distribution on the battery case according to the present disclosure.
FIG. 6 is a temperature distribution diagram of a first ratio of the first shunt element according to the present disclosure.
FIG. 7 is a temperature distribution diagram of a second ratio of the first shunt element according to the present disclosure.

FIG. 8 is a temperature distribution diagram of a third ratio of the first shunt element according to the present disclosure.

FIG. 9 is a temperature distribution diagram of a fourth ratio of the first shunt element according to the present disclosure.

FIG. 10 is a data graph of the temperature difference and the area ratio of the first shunt element according to the present disclosure.

FIG. 11 is a schematic flowchart of a method for manufacturing the battery case according to an embodiment of the present disclosure.

Reference numbers in the drawings: 100, battery case; 1, case body; 11, inner support beam; 12, outer protective shell; 120, battery case cavity; 121, shell bottom plate; 122, shell side plate; 13, output pipe connector; 131, first output portion; 132, second output portion; 14, inner reflux passage; 141, first reflux pipe; 142, second reflux pipe; 151, first pipe connector; 152, second pipe connector; 16, inner guide passage; 2, liquid-cooling assembly; 21, first shunt element; 211, first shunt body; 212, first inlet; 213, first outlet; 214, first inner flow pipe; 2141, first inner main pipe; 2142, first inner side pipe; 2143, first outer flow pipe; 22, second shunt element; 221, second shunt body; 222, second inlet; 223, second outlet; 224, second inner flow pipe; 2241, second inner main pipe; 2242, second inner side pipe; 2243, second outer flow pipe.

## DETAILED DESCRIPTION

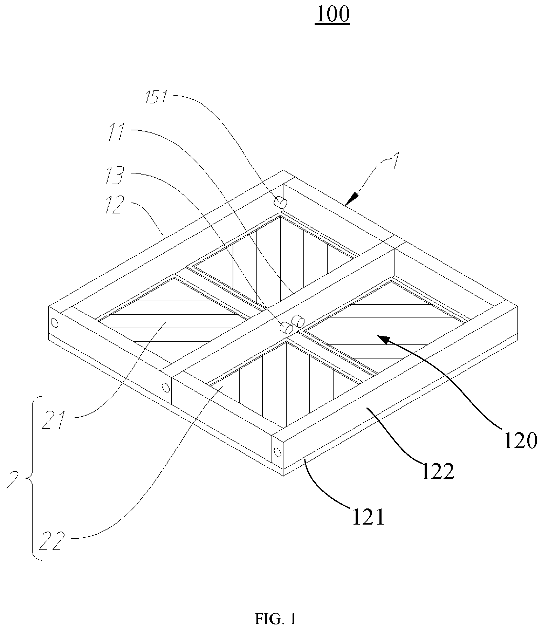

Specifically, as shown in FIG. 1 to FIG. 5, the present disclosure discloses a battery case 100, which includes a case body 1. The case body 1 includes an outer protective shell 12. Generally, the case body 1 has an upper case cover and a lower case body. The upper case cover is detachably connected to a top of the lower case body. The detachable connection here can be selected as a bolted connection, a snap-fit connection, a magnetic connection, or any combination of the above two connection manners, or a combination of the above three connection manners. It should be noted that since the upper case cover belongs to a relatively mature conventional technology in the field of batteries, and the present disclosure does not make significant improvements to the upper case cover, therefore, the upper case cover is not described in much detail in the embodiment, and is not illustrated in the accompanying drawings.

It can be understood that the lower case body is mainly formed by enclosing a shell bottom plate 121 and four shell side plates 122, and the shell bottom plate 121 and the four shell plates are enclosed to form a battery case cavity. The four shell side plates 122 are fixedly connected to the shell bottom plate 121 respectively, and two adjacent shell side plates 122 are fixedly connected to each other. The fixed connection herein may be selected as a bolt connection, a snap-fit connection, a welding connection, or an integral molding.

In current battery assembling processes, a battery module and related electrical components are first assembled and fixed into the battery case cavity of the lower case body, then the upper case cover is closed onto the lower case body, so that the battery module and the related electrical components are located in a relatively sealed battery case cavity, which not only protects the battery module and related electrical components from the influence of liquid and dust, but also protects the battery module and related electrical components from damage due to compressing or impacting by an external force, thereby improving the use stability of a battery pack and achieving the best use performance of the battery pack.

Due to the fact that each battery cell of the battery module releases a certain amount of heat during charging and discharging, the heat released by one or more battery cells will be accumulated and stays in the relatively closed battery case cavity, which will lead to high temperature inside the battery case cavity. The operation of the battery module under relatively high temperature conditions will greatly reduce the working performance of each battery cell, making it impossible for the battery cell to maintain optimal working performance.

In order to solve the problem that a large amount of heat accumulated in the battery case cavity, existing battery packs are usually provided with liquid-cooling plates. After cooling liquid is introduced into the liquid-cooling plates, a temperature difference is formed between the liquid-cooling plates and air inside the battery case cavity, so that heat inside the battery case cavity is absorbed into the liquid-cooling plates, thereby achieving cooling effect.

However, due to the placement of the battery module inside the battery case cavity, as well as the connection relationships between the battery module and the electric components, a large amount of heat is mainly concentrated in the central part of the battery case cavity, that is, the temperature distribution inside the battery case cavity is usually higher in the central part and lower in the peripheral part. Existing liquid-cooling plates adopt an overall balanced cooling method, which results in lower cooling efficiency of the existing liquid-cooling plates.

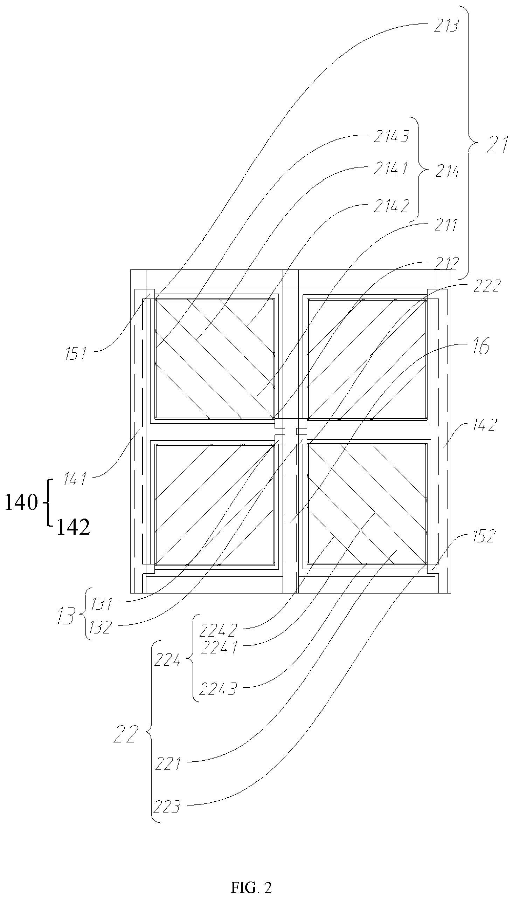

Based on the problem of low cooling efficiency of the existing liquid-cooling plates, in some embodiments, please refer to FIGS. 1 and 2 for detail, the lower case body of the case body 1 is provided with an inner support beam 11. The inner support beam 11 is fixedly connected inside the outer protective shell 12. That is, the inner support beam 11 is arranged in the battery case cavity, and the shell bottom plate 121 and the shell side plates 122 of the lower box body are both fixedly connected to the inner support beam 11. In some embodiments, a welding manner is adopted, and certainly, a bolt connection may also be selected, so that an overall structural strength of the case body 1 can be effectively improved by using the inner support beam 11.

As a core solution of this embodiment, the inner support beam 11 is provided with an inner guide passage 16. The inner guide passage 16 can be directly molded inside the inner support beam 11. Alternatively, a pipeline can be arranged in a cavity structure inside the inner support beam 11 to form the inner guide passage 16. The inner guide passage 16 passes through the shell side plates 122 of the lower case body, and is in communication with a main inlet on the lower case body, so that external heat exchange medium (such as water, cooling liquid, etc.) can be transmitted to the interior of the inner guide passage 16. Therefore, the battery cells close to one side of the inner support beam 11 can conduct a small amount of heat to the inner guide passage 16, achieving a purpose of heat exchange. In addition, the inner support beam 11 is further provided with an output pipe connector 13. The output pipe connector 13 is in communication with the inner guide passage 16.

In some embodiments, please refer to FIGS. 1, 2 and 3 for detail, the battery case 100 further includes a liquid-cooling assembly 2. The liquid-cooling assembly 2 includes a first shunt element 21 and a second shunt element 22 arranged opposite to each other. The liquid-cooling assembly 2 is mounted in the case body 1, and the inner guide passage 16 is arranged between the first shunt element 21 and the second shunt element 22, so that the first shunt element 21 and the second shunt element 22 of the liquid-cooling assembly 2 are respectively located at two opposite sides of the inner guide passage 16. Furthermore, the first shunt element 21 and the second shunt element 22 are both in communication with the output pipe connector 13, so that the heat exchange medium inside the inner guide passage 16 can be shunted and injected into the first shunt element 21 and the second shunt element 22 through the output pipe connector 13. Meanwhile, the first shunt element 21 guides the heat exchange medium to be transmitted along a diagonal direction of the first shunt element 21 from a corner of the first shunt element 21 near the inner guide passage 16. The second shunt element 22 guides the heat exchange medium to be transmitted along a diagonal direction of the second shunt element 22 from a corner of the second shunt element 22 near the inner guide passage 16. That is, under the diversion of the first shunt element 21 and the second shunt element 22, the heat exchange medium will be transmitted along a diagonal direction of the first shunt element element 21 and along a diagonal direction of the second shunt element element 22.

In the embodiment, the heat exchange medium will effectively performs heat exchange with the battery cells of the battery module when flowing through the first shunt element 21 and the second shunt element 22, thereby achieving a purpose of cooling each battery cell of the battery module. On one hand, compared to the existing single liquid-cooling plate, the difficulty of production and processing can be greatly reduced, thereby greatly reducing the production cost of the liquid-cooling assembly 2. In addition, in the long-term use of the liquid-cooling assembly 2 in the future, when problems such as leakage occur in the liquid-cooling assembly 2, only the corresponding first shunt element 21 and the second shunt element 22 need to be replaced, thereby greatly reducing the maintenance cost of the battery pack in the future.

On the other hand, the liquid-cooling assembly 2, in cooperation with the inner guide passage 16 in the inner support beam 11, is able to provide priority cooling and temperature reduction for the central part of the battery pack. That is, as shown in FIGS. 1, 2 and 3, the battery module in the battery pack will be divided into a first battery module corresponding to the first shunt element 21 and a second battery module corresponding to the second shunt element 22 during the manufacturing and assembling processes. At this time, the first battery module and the second battery module will be separated on opposite sides of the inner support beam 11, which is equivalent to the heat exchange medium flowing through the central part of the battery module under the guidance of the inner guide passage 16, and performing preliminary heat exchange with the heat exchange medium in the inner guide passage 16.

Meanwhile, as shown in FIGS. 1, 2 and 3, the heat exchange medium is transmitted along the diagonal directions of the first shunt element 21 and the second shunt element 22, which can not only increase the transmission distance and the heat exchange time of the heat exchange medium in the first shunt element 21 and the second shunt element 22, thereby effectively improving the heat exchange efficiency of the heat exchange medium, at the same time, the heat exchange medium also flows through the central parts of the first battery module and the second battery module, providing targeted cooling for the central high-temperature areas of the first battery module and the second battery module. In this way, it is equivalent to prioritizing the cooling of the central high-temperature areas of the battery pack/battery module, reducing the temperature difference of the battery pack, and improving thermal management efficiency.

In addition, by configuring the inner guide passage 16 in the inner support beam 11, it is possible to avoid laying pipelines in the battery case cavity, thereby greatly reducing the risk of short circuit occurred in the battery module caused by liquid leakage to the battery module due to pipeline aging, and also reducing the space occupied by the pipelines in the battery case cavity, which is beneficial to saving the inner space of the battery pack and a deft design of the battery case 100, as well as the purpose of compact assembly of the battery pack. Moreover, the overall weight of the case body 1/the battery case 100 is reduced, which facilitates a light-weight design of the battery case 100.

It should be additionally noted that, the inner guide passage 16 may be configured to have an extension length according to structural designs or design requirements. For example, if the extension length of the inner guide passage 16 is one-tenth of the length of the inner support beam 11, or the extension length of the inner guide passage 16 is one-fifth of the length of the inner support beam 11, the heat exchange medium is diverted on a side near the main inlet. Alternatively, if the extension length of the inner guide passage 16 is equal to the length of the inner support beam 11, the heat exchange medium is diverted on a side away from the main inlet. The heat exchange medium flows from the main inlet and is injected into the inner guide passage 16, then flows through the entire inner support beam 11 along the extension direction of the inner guide passage 16, and finally is diverted to the first shunt element 21 and the second shunt element 22 through the output pipe connector 13.

In some embodiments, please refer to FIG. 2 for detail, the outer protective shell 12 is provided with an inner reflux passage 14. Specifically, the inner reflux passage 14 is provided on the lower case body of the outer protective shell 12, and the first shunt element 21 and the second shunt element 22 are both in communication with the inner reflux passage 14, so that the heat exchange medium flowing through the first shunt element 21 and the second shunt element 22 can be converged and transmitted to the inner reflux passage 14, and then the heat exchange medium is guided out of the case body 1 under the guidance of the inner reflux passage 14, so as to achieve a purpose of timely discharging a large amount of heat from the case body 1.

It should be noted that, according to structural designs and design requirements, the inner reflux passage 14 may be selected as one, and the inner reflux passage 14 may extend along a peripheral direction of the lower case body. In this way, a single main outlet can be configured in the lower case body, and the main outlet is in communication with the inner reflux passage 14. Thus, when the first shunt element 21 and the second shunt element 22 are both in communication with the inner reflux passage 14, the heat exchange medium carrying a large amount of heat will be converged and flows into the inner reflux passage 14, and then is guided out of the case body 1 through the main outlet.

In addition, in some embodiments, specifically, as shown in FIG. 2, the inner reflux passage 14 includes a first reflux pipe 141 and a second reflux pipe 142. The first reflux pipe 141 and the second reflux pipe 142 are both arranged parallel to the inner guide passage 16. Each of the first reflux pipe 141 and the second reflux pipe 142 is provided with a main outlet. The first shunt element 21 is arranged between the first reflux pipe 141 and the inner guide passage 16, and the first shunt element 21 is in communication with the first reflux pipe 141 via a first pipe connector 151. The second shunt element 22 is arranged between the second reflux pipe 142 and the inner guide passage 16, and the second shunt element 22 is in communication with the second reflux pipe 142 via a second pipe connector 152.

In this way, the transmission distance and time of the heat exchange medium carrying a large amount of heat on the lower case body are greatly shortened, thereby achieving the purpose of timely heat dissipation. Meanwhile, compared to a manner in which one inner reflux passage 14 extends along the peripheral direction of the lower case body, the process of forming the first reflux pipe 141 and the second reflux pipe 142 on the lower case body is more convenient and has lower processing difficulty, which is conducive to reducing processing costs.

It can be understood that forming the reflow inner channel 14 on the lower case body can also avoid laying pipelines in the battery case cavity, thereby reducing the risk of short circuit occurred in the battery module caused by liquid leakage to the battery module due to pipeline aging, and further reducing the space occupied by the pipelines in the battery case cavity, which is beneficial to saving the inner space of the battery pack and the deft design of the battery case 100, as well as the purpose of compact assembly of the battery pack. In addition, the overall weight of the case body 1/the battery case 100 is further reduced, which facilitates a lightweight design of the battery case 100.

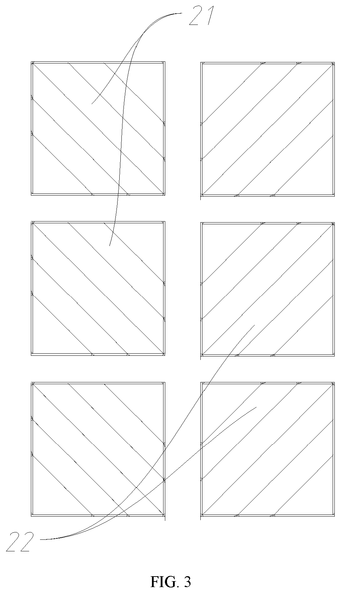

In some embodiments, as shown in FIG. 3, the battery case 100 includes more than one liquid-cooling assemblies 2. The liquid-cooling assemblies 2 are arranged along an extending direction of the inner guide passage 16, and the inner guide passage 16 successively passes through each of the liquid-cooling assemblies 2, so that the heat exchange medium flows through the first shunt element 21 and the second shunt element 22 of each liquid-cooling assembly 2 under the guidance of the inner guide passage 16, so as to reduce the temperature of the central high-temperature area of each battery module in a targeted manner, thereby achieving the purpose of high-efficiency thermal management.

In some embodiments, the inner guide passage 16 is provided with more than one output pipe connectors 13. The output pipe connectors 13 are evenly arranged, thereby preventing the pressure drop of the inner guide passage 16 from being excessively concentrated. The liquid-cooling assemblies 2 are provided in one-to-one correspondence with the output pipe connectors 13, so as to make the overall installation of the battery case 100 and the battery pack more orderly, and facilitate subsequent maintenance and repair.

In some embodiments, please refer to FIGS. 1 and FIG. 2 for detail, two liquid-cooling assemblies 2 arranged opposite to each other are provided. Therefore, two first shunt elements 21 and two second shunt elements 22 will be formed into a quasi-four-grid distribution. Two output pipe connectors 13 are arranged on the inner guide passage 16, and the two output pipe connectors 13 are both arranged in the middle of the inner support beam 11. In this way, the heat exchange medium in the inner guide passage 16 will be diverted and diffused in the middle of the inner support beam 11 to the two first shunt elements 21 and the two second shunt elements 22. Therefore, the high-temperature area between two adjacent battery modules can also be cooled in a targeted manner, thereby avoiding the problem of local high temperature caused by heat accumulation between the two adjacent battery modules. At the same time, as the heat exchange medium flows and diffuses along the diagonal directions of the first shunt element 21 and the second shunt element 22, it is able to provide priority cooling for the central part of each battery module.

It should be additionally noted that the output pipe connector 13 includes a first output portion 131 and a second output portion 132 arranged opposite to each other. Both the first output portion 131 and the second output portion 132 are in communication with the inner guide passage 16. When the heat exchange medium in the inner guide passage 16 flows to the position of the output pipe connector 13, the heat exchange medium is transmitted to the first output portion 131 and the second output portion 132 respectively. The first output portion 131 and the second output portion 132 are both fixedly connected to the inner support beam 11. The first shunt element 21 is in communication with the inner guide passage 16 via the first output portion 131, while the second shunt element 22 is in communication with the inner guide passage 16 via the second output portion 132.

In some embodiments, please refer to FIGS. 1 and 2 for detail, the first shunt element 21 includes a first shunt body 211, and a first inlet 212, a first outlet 213 and a first inner flow pipe 214 that are provided on the first shunt body 211. The first inlet 212 and the first outlet 213 are respectively arranged at two opposite diagonal corners of the first shunt body 211. The first inner flow pipe 214 extends from the first inlet 212 towards the first outlet 213, and the first inlet 212 and the first outlet 213 are both in communication with the first inner flow pipe 214. The first inlet 212 is connected to the output pipe connector 13 via a first pipeline.

Specifically, as shown in FIG. 2, one end of the first pipeline is connected to the first inlet 212 of the first shunt element 21, and the other end of the first pipeline is connected to the first output portion 131 of the output pipe connector 13, so as to guide the heat exchange medium from the first output portion 131 into the first shunt element 21. The first inner flow pipe 214 includes a first inner main pipe 2141, first inner side pipes 2142, and a first outer flow pipe 2143. The first outer flow pipe 2143 extends along a peripheral side of the first shunt body 211, and both the first inlet 212 and the first outlet 213 communicate with the first outer flow pipe 2143.

In some embodiments, both the first inner main pipe 2141 and the first inner side pipe 2142 extend from the first inlet 212 towards the first outlet 213. Both the first inlet 212 and the first outlet 213 are in communication with the first inner main pipe 2141 of the first inner flow pipe 214, and both ends of the first inner side pipe 2142 are in communication with the first outer flow pipe 2143. Optionally, the first inner side pipe 2142 can be a straight pipe, or a curved pipe (e.g., an arc-shaped pipe, a wave-shaped pipe, etc.), or a fold-line-type pipe (e.g., a trapezoid-shaped fold-line pipe, a triangle-shaped fold-line pipe, etc.).

According to Poiseuille's law, when fluid undergoes laminar motion in a horizontal circular pipe, its volumetric flow rate Q has the following relationship with the pressure difference $\Delta p$ between two ends of the pipe, the radius r and length L of the pipe, and the viscosity coefficient $\eta$ of the fluid:

$$Q = \frac{\pi r^4 \Delta P}{8 \eta L}$$

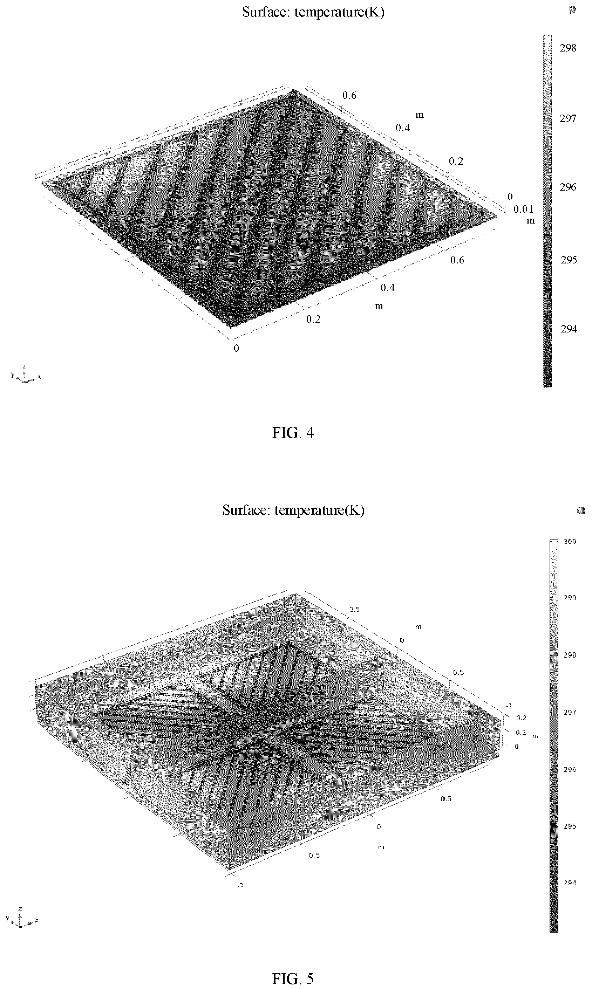

As such, the extension length of the first inner main pipe 2141 is 1.414 times the extension length of the first inner side pipe 2142 on one side away from the first inner main pipe 2141. Assuming that the pipe diameter of the first inner main pipe 2141 is the same as the pipe diameter of the first inner side pipe 2142, according to Poiseuille's law, the flow rate of the first inner main pipe 2141 can be simply calculated to be 1.414 times of the flow rate of the first inner side pipe 2142 on one side of the first inner main pipe 2141. Thus, the first inner main pipe 2141 carries away more heat. As shown in FIG. 4, assuming that the pipe diameters of the first inner main pipe 2141 and the first inner side pipe 2142 are both 0.5 cm, an initial temperature of the first shunt element 21 is 40°C, an inlet temperature of the cooling liquid is 20°C, the flow rate is 10 L/min, and the heat exchange power is 1000 W, therefore, the first shunt element 21 has the lowest temperature at its central part with a temperature difference of about 5°C.

In some embodiments, please refer to FIGS. 1 and 2 for detail, the second shunt element 22 includes a second shunt body 221, and a second inlet 222, a second outlet 223 and a second inner flow pipe 224 that are provided on the second shunt body 221. The second inlet 222 and the second outlet 223 are respectively arranged at two opposite diagonal corners of the second shunt 221. The second inner flow pipe 224 extends from the second inlet 222 to the second outlet 223, and the second inlet 222 and the second outlet 223 are both in communication with the second inner flow pipe 224. The second inlet 222 is connected to the output pipe connector 13 via a second pipeline.

Specifically, as shown in FIG. 2, one end of the second pipeline is connected to the second inlet 222 of the second shunt element 22, and the other end of the second pipeline is connected to the second output portion 132 of the output pipe connector 13, so as to guide the heat exchange medium from the second output portion 132 into the second shunt element 22. The second inner flow pipe 224 includes a second inner main pipe 2241, a second inner side pipe 2242, and a second outer flow pipe 2243. The second outer flow pipe 2243 extends along a peripheral side of the second shunt 221, and both the second inlet 222 and the second outlet 223 communicate with the second outer flow pipe 2243.

In some embodiments, both the second inner main pipe 2241 and the second inner side pipe 2242 extend from the second inlet 222 towards the second outlet 223. Both the second inlet 222 and the second outlet 223 are in communication with the second inner main pipe 2241 of the second inner flow pipe 224, and both ends of the second inner side pipe 2242 are in communication with the second outer flow pipe 2243. Optionally, the second inner side pipe 2242 can be a straight pipe, or a curved pipe (e.g., an arc-shaped pipe, a wave-shaped pipe, etc. ), or a fold-line-type pipe (e.g., a trapezoid-shaped fold-line pipe, a triangle-shaped fold-line pipe, etc.).

Thus, as shown in FIG. 4, the extension length of the second inner main pipe 2241 is 1.414 times the extension length of the second inner side pipe 2242 on one side away from the second inner main pipe 2241. Assuming that the pipe diameter of the second inner main pipe 2241 is the same as the diameter of the second inner side pipe 2242, according to Poiseuille's law, the flow rate of the second inner main pipe 2241 can be simply calculated to be 1.414 times the flow rate of the second inner side pipe 2242 on one side of the second inner main pipe 2241. Thus, the second inner main pipe 2241 carries away more heat.

An unexpected effect is that, as shown in FIG. 5, taking two liquid-cooling assemblies 2 that are relatively arranged as an example, the temperature in the central parts of the battery case 100 and the battery pack is the lowest, so that heat in the central part of the battery pack is more easily carried away. By means of the cooperation of the two first shunt elements 21 and the two second shunt elements 22, the purpose of performing targeted cooling on the high-temperature area between two adjacent battery modules is achieved, thereby avoiding the problem of local high temperature caused by the heat accumulation between the two adjacent battery modules. Therefore, by means of the first shunt of the inner guide passage 16, the second shunt of the first shunt element 21 and the second shunt of the second shunt element 22, a rapid cooling effect on the central high-temperature areas of the battery module and the battery pack can be well achieved.

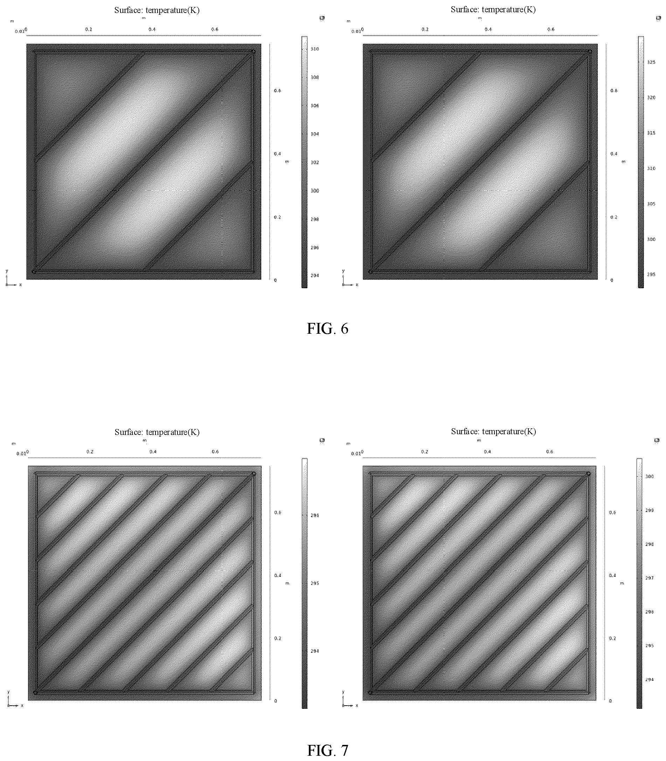

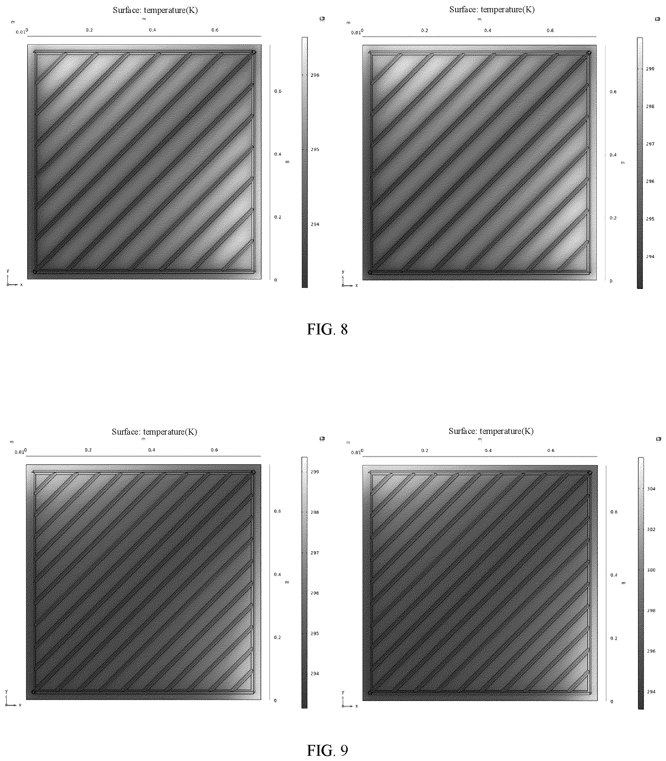

It should be noted that, please refer to FIG. 6 to FIG. 9 for detail, a total number of the first inner main pipe 2141 and the first inner side pipes 2142 in FIG. 6 is three, a total number of the first inner main pipe 2141 and the first inner side pipes 2142 in FIG. 7 is nine, a total number of the first inner main pipe 2141 and the first inner side pipes 2142 in FIG. 8 is thirteen, and a total number of the first inner main pipe 2141 and the first inner side pipes 2142 in FIG. 9 is nineteen. In FIG. 6 to FIG. 9, the first shunt element 21 on the left side has a heat exchange power of 1kW, while the first shunting member 21 on the right side has a heat exchange power of 2 kW.

A total number of the first inner main pipe 2141 and the first inner side pipes 2142 described above is between nine and thirteen. In some embodiments, the total number of the first inner main pipe 2141 and the first inner side pipes 2142 is thirteen. When the total number of the first inner main pipe 2141 and the first inner side pipes 2142 is less than nine or more than thirteen, the temperature difference is relatively large. While the total number of the first inner main pipe 2141 and the first inner side pipe 2142 is between nine and thirteen, it can effectively ensure that the temperature difference of the first shunt element 21 is relatively small, and both the central part and the peripheral part of the first shunt element 21 can absorb heat well. At the same time, it can also avoid the problem of the spacing between the first inner main pipe 2141 and the first inner side pipe 2142, as well as the spacing between two adjacent first inner side pipes 2142 being too dense or too sparse.

In addition, the area occupied by the first inner main pipe 2141, the first outer flow pipe 2143 and the first inner side pipe 2142 in the orthogonal projection direction of a heat-exchanging top surface of the first shunt element 21 is defined as a total pipeline area. The heat-exchanging top surface referred to here is a side surface of the first shunt element 21 having the largest area.

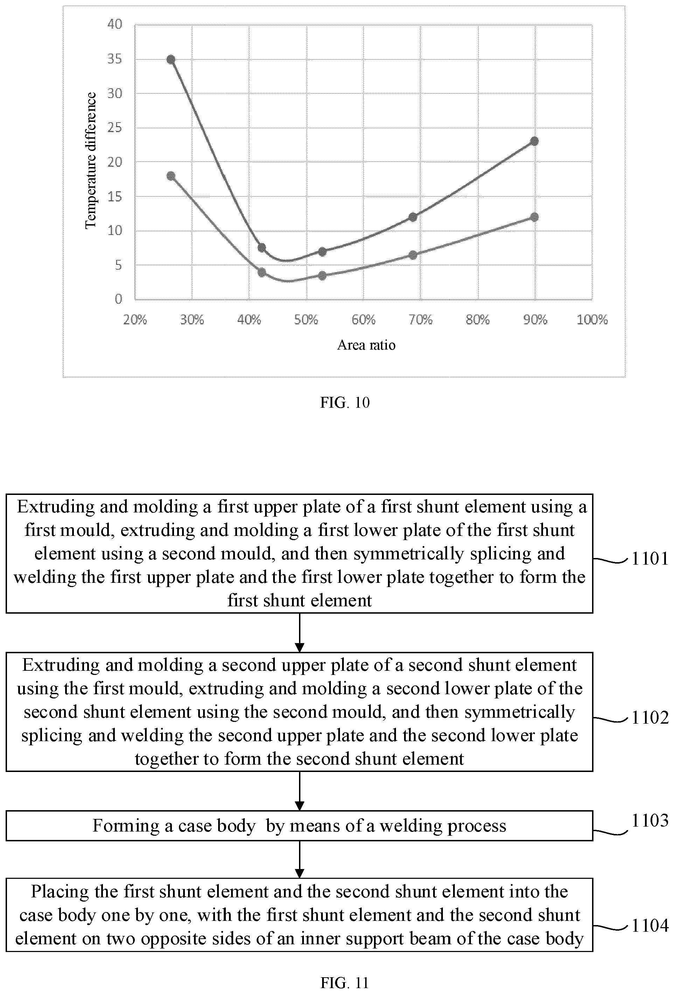

Please refer to FIGS. 6 to 10 for detail. In FIG. 6, the ratio of the total pipeline area to a total area of the first shunt element 21 is 8%. In FIG. 7, the ratio of the total pipeline area to the total area of the first shunt element 21 is 13%. In FIG. 8, the ratio of the total pipeline area to the total area of the first shunt element 21 is 19%. In FIG. 9, the ratio of the total pipeline area to the total area of the first shunt element 21 is 22%. The area ratio in FIG. 10, after being reduced by 3.14 times, is the ratio of the total pipeline area to the total area of the first shunt element 21.

The ratio of the total pipeline area to the total area of the first shunt element 21 is between 13% and 19%. In some embodiments, the ratio of the total pipeline area to the total area of the first shunt element 21 is 14%. In this way, when the ratio of the total pipeline area to the total area of the first shunt element 21 is between 13% and 19%, the temperature difference can be effectively ensured to be relatively small, and it is well considered that both the central part and the peripheral part of the first shunt element 21 can absorb heat, that is, the heat absorption efficiency of the first shunt element 21 is relatively high.

It should also be noted that the number and the area ratio of pipelines described above are also applicable to the second shunt member 22.

Based on the structure and the connection relationship of the battery case 100 described above, the present disclosure further discloses a battery pack which includes a battery case 100 and a battery module. The battery module is mounted in a case body 1 of the battery case 100, and exchanges heat with the liquid-cooling assembly 2.

In addition, please refer to FIG. 11, the present disclosure also discloses a method for manufacturing the above-described battery case 100. As shown in FIG. 11, the method begins at block 1101.

At block 1101, a first upper plate of the first shunt element 21 is extruded and molded using a first mould, a first lower plate of the first shunt element 21 is extruded and molded using a second mould, and then the first upper plate and the first lower plate is symmetrically spliced and welded together to form the first shunt element 21;

At block 1102, a second upper plate of the second shunt element 22 is extruded and molded using the first mould, a second lower plate of the second shunt element 22 is extruded and molded using the second mould, and the second upper plate and the second lower plate is symmetrically spliced and welded together to form the second shunt element 22;

At block 1103, the case body 1 is formed by means of a welding process;

At block 1104, the first shunt element 21 and the second shunt element 22 are placed into the case body 1 one by one, with the first shunt element 21 and the second shunt element 22 on two opposite sides of the inner support beam 11 of the case body 1.

**Claims**

1. A battery case (100), comprising:

   a case body (1) provided with an inner support beam (11) arranged in a battery case cavity (120) of the case body (1), wherein the inner support beam (11) is provided with an inner guide passage (16) and an output pipe connector (13); the output pipe connector (13) is in communication with the inner guide passage (16); and
   a liquid-cooling assembly (2) mounted in the case body (1); wherein the liquid-cooling assembly (2) comprises a first shunt element (21) and a second shunt element (22) arranged opposite to each other; the inner guide passage (16) is arranged between the first shunt element (21) and the second shunt element (22), and the first shunt element (21) and the second shunt element (22) are both in communication with the output pipe connector (13); the first shunt element (21) is configured to guide heat exchange medium to be transmitted along a diagonal direction of the first shunt element (21) from a corner of the first shunt element (21) near the inner guide passage (16); the second shunt element (22) is configured to guide heat exchange medium to be transmitted along a diagonal direction of the second shunt element (22)

   from a corner of the second shunt element (22) near the inner guide passage (16).

2. The battery case (100) according to claim 1, wherein the amount of the liquid-cooling assembly (2) is more than one; the liquid-cooling assemblies (2) are arranged along an extending direction of the inner guide passage (16), and the inner guide passage (16) successively passes through each of the liquid-cooling assemblies (2); and the amount of the output pipe connector (13) is more than one; the output pipe connectors (13) are evenly arranged; wherein the liquid-cooling assemblies (2) are provided in one-to-one correspondence with the output pipe connectors (13).

3. The battery case (100) according to claim 2, wherein the amount of the liquid-cooling assembly (2) is two; the amount of the output pipe connector (13) is two; wherein the two output pipe connectors (13) are both arranged in the middle of the inner support beam (11).

4. The battery case (100) according to any one of claims 1 to 3, wherein the case body (1) further comprises an outer protective shell (12); wherein the outer protective shell (12) is provided with an inner reflux passage (14); the inner support beam (11) is fixedly connected inside the outer protective shell (12), and the first shunt element (21) and the second shunt element (22) are both in communication with the inner reflux passage (14), so that the heat exchange medium flowing through the first shunt element (21) and the second shunt element (22) is converged and transmitted to the inner reflux passage (14), and then is guided out of the case body (1) under the guidance of the inner reflux passage (14).

5. The battery case (100) according to claim 4, wherein the inner reflux passage (14) comprises a first reflux pipe (141) and a second reflux pipe (142); wherein the first reflux pipe (141) and the second reflux pipe (142) are both arranged parallel to the inner guide passage (16); the first shunt element (21) is arranged between the first reflux pipe (141) and the inner guide passage (16), and the first shunt element (21) is in communication with the first reflux pipe (141) via a first pipe connector (151); the second shunt element (22) is arranged between the second reflux pipe (142) and the inner guide passage (16), and the second shunt element (22) is in communication with the second reflux pipe (142) through a second pipe connector (152).

6. The battery case (100) according to any one of claims 1 to 3, wherein the output pipe connector (13) comprises a first output portion (131) and a second output portion (132) arranged opposite to each other; wherein both the first output portion (131) and the second output portion (132) are fixedly connected to the inner support beam (11); the first shunt element (21) is in communication with the inner guide passage (16) via the first output portion (131), while the second shunt element (22) is in communication with the inner guide passage (16) via the second output portion (132).

7. The battery case (100) according to any one of claims 1 to 3, wherein the first shunt element (21) comprises a first shunt body (211), and a first inlet (212), a first outlet (213) and a first inner flow pipe (214) that are provided on the first shunt body (211); wherein the first inlet (212) and the first outlet (213) are respectively arranged at two opposite diagonal corners of the first shunt body (211); the first inner flow pipe (214) extends from the first inlet (212) to the first outlet (213); the first inlet (212) and the first outlet (213) are both in communication with the first inner flow pipe (214); and the first inlet (212) is connected to the output pipe connector (13) via a first pipeline.

8. The battery case (100) according to any one of claims 1 to 3, wherein the second shunt element (22) comprises a second shunt body (221), and a second inlet (222), a second outlet (223), and a second inner flow pipe (224) that are provided on the second shunt body (221); wherein the second inlet (222) and the second outlet (223) are respectively arranged at two opposite diagonal corners of the second shunt body (221); the second inner flow pipe (224) extends from the second inlet (222) to the second outlet (223); the second inlet (222) and the second outlet (223) are both in communication with the second inner flow pipe (224); and the second inlet (222) is connected to the output pipe connector (13) via a second pipeline.

9. A battery pack, comprising:

the battery case (100) according to any one of claims 1 to 8; and
a battery module arranged in the case body (1) of the battery case (100); wherein the battery module exchanges heat with the liquid-cooling assembly (2).

10. A method for manufacturing the battery case (100) according to any one of claims 1 to 3, comprising:

extruding and molding a first upper plate of the first shunt element (21) using a first mould, extruding and molding a first lower plate of the first shunt element (21) using a second mould, and then symmetrically splicing and welding the first upper plate and the first lower plate together to form the first shunt element (21);
extruding and molding a second upper plate of the second shunt element (22) using the first mould, extruding and molding a second lower plate of the second shunt element (22) using the second mould, and then symmetrically splicing and welding the second upper plate and the second lower plate together to form the second shunt element (22);
forming the case body (1) by means of a welding process; and
placing the first shunt element (21) and the second shunt element (22) into the case body (1) one by one, with the first shunt element (21) and the second shunt element (22) on two opposite sides of the inner support beam (11) of the case body (1).

FIG. 1

213

2143
2141 } 214
2142
211
212
222
21

151
16

142

141
140 {
142
152

13 { 131
132

2242
2241 } 224
2243

22 {

221

223

FIG. 2

FIG. 3

Surface: temperature(K)

FIG. 4

Surface: temperature(K)

FIG. 5

FIG. 6

FIG. 7

FIG. 8

FIG. 9

FIG. 10

| Extruding and molding a first upper plate of a first shunt element using a first mould, extruding and molding a first lower plate of the first shunt element using a second mould, and then symmetrically splicing and welding the first upper plate and the first lower plate together to form the first shunt element | 1101 |

| Extruding and molding a second upper plate of a second shunt element using the first mould, extruding and molding a second lower plate of the second shunt element using the second mould, and then symmetrically splicing and welding the second upper plate and the second lower plate together to form the second shunt element | 1102 |

| Forming a case body by means of a welding process | 1103 |

| Placing the first shunt element and the second shunt element into the case body one by one, with the first shunt element and the second shunt element on two opposite sides of an inner support beam of the case body | 1104 |

FIG. 11

## EUROPEAN SEARCH REPORT

**Application Number**

EP 24 21 5777

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/398652 A1 (STEPHENS MARK CHARLES [US] ET AL) 24 December 2020 (2020-12-24) * paragraphs [0004], [0040], [0043]; figures 6,6a * | 1-10 | INV. H01M10/613 H01M10/617 H01M10/6556 H01M10/6567 |
| A | US 2017/200993 A1 (SONG TAE WON [KR] ET AL) 13 July 2017 (2017-07-13) * paragraph [0067]; figures 12a,12b * | 1-10 | H01M10/6568 H01M50/204 |
| A | US 2022/173448 A1 (TOKOZAKURA DAISUKE [JP] ET AL) 2 June 2022 (2022-06-02) * claim 2; figures 2,3 * | 1-10 | |

**TECHNICAL FIELDS SEARCHED (IPC)**

H01M

The present search report has been drawn up for all claims

| Place of search | Date of completion of the search | Examiner |
|---|---|---|
| The Hague | 28 April 2025 | Janssens, Gerd |

EPO FORM 1503 03.82 (P04C01)

## ANNEX TO THE EUROPEAN SEARCH REPORT
## ON EUROPEAN PATENT APPLICATION NO.

EP 24 21 5777

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2025

| Patent document cited in search report | Publication date | Patent family member(s) | Publication date |
|---|---|---|---|
| US 2020398652 A1 | 24-12-2020 | CN 112055898 A | 08-12-2020 |
| | | EP 3759761 A1 | 06-01-2021 |
| | | US 2020398652 A1 | 24-12-2020 |
| | | WO 2019169080 A1 | 06-09-2019 |
| US 2017200993 A1 | 13-07-2017 | KR 20170084606 A | 20-07-2017 |
| | | US 2017200993 A1 | 13-07-2017 |
| US 2022173448 A1 | 02-06-2022 | BR 102018014050 A2 | 16-04-2019 |
| | | CN 109309268 A | 05-02-2019 |
| | | EP 3446909 A1 | 27-02-2019 |
| | | KR 20190013489 A | 11-02-2019 |
| | | RU 2681436 C1 | 06-03-2019 |
| | | US 2019036181 A1 | 31-01-2019 |
| | | US 2022173448 A1 | 02-06-2022 |

EPO FORM P0459

For more details about this annex : see Official Journal of the European Patent Office, No. 12/82